(19) Europäisches Patentamt
European Patent Office
Office européen des brevets

(11) Veröffentlichungsnummer : **0 044 277**
**B1**

(12) # EUROPÄISCHE PATENTSCHRIFT

(45) Veröffentlichungstag der Patentschrift : **28.08.85**

(51) Int. Cl.[4] : **D 06 N 7/00**, C 08 J 9/10, C 09 D 11/02

(21) Anmeldenummer : **81810277.4**

(22) Anmeldetag : **09.07.81**

(54) **Druckfarbenkompositionen und deren Verwendung zur Herstellung texturierter verschäumter Harzmaterialien.**

(30) Priorität : **15.07.80 CH 5413/80**

(43) Veröffentlichungstag der Anmeldung : **20.01.82 Patentblatt 82/03**

(45) Bekanntmachung des Hinweises auf die Patenterteilung : **28.08.85 Patentblatt 85/35**

(84) Benannte Vertragsstaaten : **BE CH DE FR GB IT LI NL SE**

(56) Entgegenhaltungen :
**DE-A- 2 721 722**
**DE-A- 2 729 892**
**FR-A- 1 530 362**
**FR-A- 2 298 543**
**GB-A- 1 159 645**

(73) Patentinhaber : **CIBA-GEIGY AG**
**Postfach**
**CH-4002 Basel (CH)**

(72) Erfinder : **Hauser, Hanspeter**
**Herrenweg 99**
**CH-4147 Aesch (CH)**
Erfinder : **Eckert, Peter**
**Blumenrain 6**
**CH-4465 Magden (CH)**

**EP 0 044 277 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist bekannt, dass man zur Herstellung von Schaumstoffprodukten mit reliefartiger Oberfläche ausgewählte Partien der Oberfläche eines verschäumbaren polymeren Materials mit Druckfarben bedruckt, die ein Mittel enthalten, welches die Schaumbildung verhindert, wenn das bedruckte Material anschliessend einer Hitzebehandlung unterzogen wird. Dabei wird das Material an den nicht bedruckten Stellen, oder an den ohne schaumbildungverhinderndes Mittel bedruckten Stellen aufgebläht, wodurch an den mit Schaumbildung verhinderndem Mittel bedruckten Stellen Vertiefungen zurückbleiben.

Bisher wurden als die Schaumbildung verhindernde Mittel beispielsweise aliphatische oder aromatische Dicarbonsäuren bzw. ihre Anhydride oder Halogenide verwendet (CH-A-458 712). Diese Inhibitoren eignen sich jedoch nur für nicht-wässrige Druckfarben. Inzwischen haben aber wässrige Druckfarben aus ökologischen und arbeitshygenischen Gründen immer grössere Bedeutung erlangt. Für diese wurden als Inhibitoren beispielsweise Triazole insbesonders Benztriazol und Aminotriazole eingesetzt. Diese haben jedoch den Nachteil, dass sie ein Alkali benötigen, um die genannten Inhibitoren zu lösen und den pH-Wert der Druckfarbe auf über pH 8 einzustellen.

Gegenstand der vorliegenden Erfindung ist nun eine Druckfarbe zur Herstellung texturierter verschäumter Flächen, enthaltend ein Pigment oder Pigmentpräparat, ein thermoplastisches Harz, Wasser, ein wasserlösliches organisches Lösungsmittel und, als ein die Schaumbildung von Blähmittel enthaltenden schäumbaren Materialien verhinderndes Mittel, ein Azol der Formel

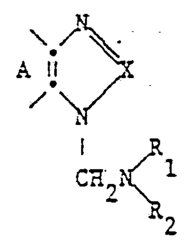

(1)

worin A einen Benzol- oder Naphtalinrest, X ein N-Atom oder die Gruppe = C—R bedeutet, worin R ein H Atom oder eine Alkylgruppe mit 1-4 C bedeutet, $R_1$ eine Alkyl- oder Alkenylgruppe mit 1-20 C, eine Hydroxyalkylgruppe mit 2-20 C, eine Alkoxyalkyl- oder Cyanoalkylgruppe mit 3-20 C, eine Cycloalkylgruppe mit 5-12 C, eine Phenalkylgruppe mit 7-9 C bedeutet. $R_2$ die gleiche Bedeutung wie $R_1$ hat und ausserdem noch H sein kann, oder worin $R_1$ und $R_2$ zusammen mit dem N-Atom einen heterocyclischen Ring bilden.

Ein weiterer Gegenstand der Erfindung ist ein Verfahren zum Prägen hitzeschäumbarer, harzhaltiger Materialien durch Aufbringen der erfindungsgemässen Druckfarben auf ausgewählte Partien der Oberfläche von hitzeschäumbaren, ein Blähmittel enthaltenden Harzmaterialien und nachfolgendem Erhitzen über die Zersetzungstemperatur des Blähmittels.

Für die erfindungsgemässen Druckfarben kommen sowohl anorganische Pigmente, beispielsweise Russ, Titandioxyd, Zinksulfid, Cadmiumsulfid oder Eisenoxyde, als auch organische Pigmente, insbesondere solche der Phtalocyanin-, Anthrachinon-, Perionon-, Indigoid-. Thioindigoid-, Dioxazin-, Isoindolin-, Isoindolinon-, Perylen, Azo-, Chinophthalon- und Chinacridonreine und von Metallkomplexen, beispielsweise von Azo-, Azomethin- oder Methinfarbstoffen, in Frage. Es können auch Gemische verschiedener Pigmente verwendet werden.

Als besonders zweckmässig erweist sich die Verwendung von Pigmentpräparaten, insbesondere solchen, die als Trägerstoff ein carbonsäuregruppenhaltiges Polyacrylharz enthalten. Die Herstellung solcher Präparate ist. z. B. in der DE-A-2 729 892 beschrieben. Man verwendet zweckmässig 1-10 Gewichts-Teile Pigment auf 100 Gewichts-Teile Druckfarbe.

Als die Schaumbildung verhinderndes Mittel verwendet man vorzugsweise ein Azol der Formel

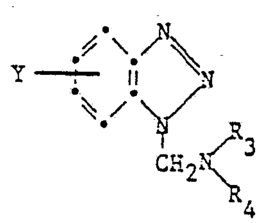

(2)

worin $R_3$ und $R_4$ Alkylreste mit 1-6 C oder Hydroxyalkysreste mit 2-6 C und Y ein H-Atom, eine Alkylgruppe mit 1-6 C, insbesondere die Methylgruppe oder eine Phenalkylgruppe mit 7-9 C bedeutet.

In der nachfolgenden Tabelle sind einige Beispiele von geeigneten Azolen genannt, die der Formel 3) entsprechen.

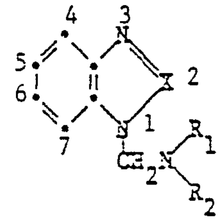

(3)

| Verb. | X | $R_1$ | $R_2$ |
|---|---|---|---|
| 1 | N | β-hydroxyäthyl | β-hydroxyäthyl |
| 2 | CH | β-hydroxyäthyl | β-hydroxyäthyl |
| 3 | N | β-hydroxypropyl | β-hydroxypropyl |
| 4 | N | γ-hydroxypropyl | γ-hydroxypropyl |
| 5 | CH | γ-hydroxypropyl | γ-hydroxypropyl |
| 6 | N | $-CH_2-CH=CH_2$ | $-CH_2-CH=CH_2$ |
| 7 | CH | $-CH_2-CH=CH_2$ | $-CH_2-CH=CH_2$ |
| 8 | N | methyl | β-hydroxyäthyl |
| 9 | N | methyl | γ-hydroxypropyl |
| 10 | CH | methyl | γ-hydroxypropyl |
| 11 | N | n-oktadecyl | H |
| 12 | CH | n-oktadecyl | H |
| 13 | N | β-methoxyäthyl | β-methoxyäthyl |
| 14 | CH | γ-methoxypropyl | γ-methoxypropyl |
| 15 | N | äthyl | äthyl |
| 16 | $C(CH_3)$ | β-hydroxyalkyl | β-hydroxyalkyl |
| 17 | $C(C_4H_9)$ | β-hydroxyalkyl | β-hydroxyalkyl |

Als weitere Azole kommen in Betracht :

1-Morpholinomethyl-benztriazol
1-Piperazinomethyl-benztriazol
Von besonderem Interesse ist ein Gemisch bestehend aus dem 1-Bis(β-hydroxyäthylamino)-methyl-5- und 6-methyl-benztriazol und benzimidazol.

Bei den erwähnten Azolen handelt es sich um bekannte Verbindungen deren Herstellung und Verwendung als Metallpassivatoren, beispielsweise in Schmier- und Frostschutzmitteln, in der GB-A-1 466 558 beschrieben ist.

Man verwendet zweckmässig 2-20 Gewichts-Teile des Azols auf 100 Gewichts-Teile der Druckfarbe. Die Einarbeitung kann direkt, vorzugsweise aber über eine konzentrierte wässrige Lösung des Azols erfolgen.

Als thermoplastische Druckfarben-Harze seien insbesondere Polyvinylchlorid, Polyvinylidenchlorid, Vinylchlorid-Vinylacetat-Copolymer, Polyurethan, Polyvinylacetat, Polyvinylalkohol oder ein Polyacrylharz, vorzugsweise ein solches, enthaltend freie Carboxylgruppen, erwähnt, sowie Mischungen dieser Harze.

Man verwendet vorteilhaft 15-40 Gewichts-Teile des Harzes auf 100 Gewichts-Teile der Druckfarbe.

Als organische Lösungsmittel verwendet man wasserlösliche und insbesondere mit Wasser mischbare Lösungsmittel. Bevorzugt sind aliphatische Alkohole mit 1-4 C, beispielsweise Methanol, Aethanol, n-Propanol, Isopropanol oder n-Butanol. Daneben kommen aber auch andere organische Lösungsmittel, wie Ketone, z. B. Aceton oder Methyläthylketon, ferner Ester, z. B. Aethylacetat, und Glykoläther, z. B Glykol-monomethyl und -monoäthyläther in Betracht. Es können auch Gemische verschiedener Lösungsmittel verwendet werden.

Man verwendet zweckmässig 5-25, vorzugsweise 10-25 Gewichts-Teile des organischen Lösungsmittels und 5-75 Teile Wasser auf 100 Gewichts-Teile der Druckfarbe. Gegebenenfalls können auch geringere Mengen organischen Lösungsmittels verwendet werden.

Das Bedrucken der verschäumbaren polymeren Materialien erfolgt nach den dafür üblichen Verfahren, beispielsweise im Siebdruck, Hoch- oder Flachdruck, vorzugsweise aber im Tiefdruck.

Es können die verschiedensten verschäumbaren polymeren Materialien bedruckt werden, die sich vorzugsweise auf einem Träger befinden, beispielsweise einem dünnen Filz, einem Fliess, Gewirke oder Gewebe aus Baumwolle, Wolle, Asbest, Glas oder synthetischen Fasern, einer thermoplastischen oder elastomeren Kunststoffolie, beispielsweise aus einem Butadien-Styrol-Copolymeren, Polychloropren, Polyvinylchlorid oder Polyvinylacetat. Sofern der Träger aus einem Fasermaterial besteht, wird er vor der Beschichtung zweckmässig mit einem Harz, beispielsweise Polyvinylchlorid, Polyvinylacetat, Vinylchlorid-Vinylacetat-Copolymer, Polyacryl- oder Polymethacrylsäureester, Polyäthylen, Polystyrol, Butadienstyrol-Copolymer, Butadien-Acrylnitril-Copolymer sowie natürlichem oder synthetischem Kautschuk oder kautschukartigen Polymeren imprägniert.

Die verschäumbaren harzhaltigen Materialien bestehen vorzugsweise aus einer Dispersion eines oder mehrerer Harze in einem flüssigen Medium. Die besten Ergebnisse erzielt man bei Verwendung eines Plastisols, d. h. einer Dispersion eines Polymeren in einem Weichmacher, da diese eine gute Fliessfähigkeit bei Zimmertemperatur besitzt, jedoch durch Wärmebehandlung (Gelieren) in eine biegsame und zähe thermoplastische Masse umgewandelt wird. Als bevorzugte Harze dienen Vinylchloridpolymere, z. B. Polyvinylchlorid, sowie Copolymere aus 60 %-95 % Vinylchlorid und 40 %-5 % einer anderen Vinylverbindung. Als Weichmacher dienen die dafür gebräuchlichen Ester wie Dioctylphthalat, Trikresylphosphat oder Oktyldiphenylphosphat sowie Polymerweichmacher.

Die verschäumbaren Materialien enthalten ein Blähmittel. Dies sind Verbindungen, die sich beim Erhitzen unter Freiwerden eines inerten Gases zersetzen und deren Rückstände mit den in den Mischungen verwendeten Materialien verträglich sind. Bevorzugte Blähmittel sind Azodicarbonamid ($H_2NCON = N\text{-}CONH_2$), Bis-(p-hydroxybenzolsulfonyl)-hydrazid, Bis-(p-hydroxybenzolsulfonyl)-semicarbazid, Azo-bis-isobutyronitril, Diazoaminobenzol und N,N'-Dimethyl-N,N'-dinitrosoterephthaldiamid.

Die verschäumbaren Materialien können auch noch die üblichen Füllmittel und Pigmente sowie Stabilisatoren enthalten.

Nach dem Bedrucken wird das verschäumbare Material bis zum Erweichen erhitzt, wobei sich das Blähmittel unter Bildung einer Zellstruktur zersetzt. Dies geschieht vorzugsweise in einem Heissluftofen. Das aufgeschäumte Produkt lässt man langsam abkühlen.

Gegenüber den in den Druckfarben der DE-A-2 721 722 verwendeten Inhibitoren zeigen die erfindungsgemässen den Vorzug, dass sir kein pH-regulierendes Mittel benötigen, d. h. dass sie auch für Druckfarben mit einem kleineren pH-Wert als 8 verwendbar sind, und besitzen ferner den Vorteil einer leichteren Einarbeitbarkeit, einer besseren Verträglichkeit mit wässrigen Acrylharzen, einer besseren Lagerstabilität in PVC-Latices, einer geringeren Viscositätsbeeinflussung und einer gegenüber Aminotriazolen geringeren Toxizität.

In den nachfolgenden Beispielen bebeuten - sofern nichts anderes angegeben - die Teile Gewichsteile, und Prozente Gewichtsprozente. Die Temperaturen sind in Celsiusgraden angegeben.

Beispiel 1 : (Herstellung der Druckfarbe)

Man vermischt unter ühren 5 Teile eines gemäss DE-OS 2 729 892 erhaltenen Pigmentpräparates, bestehend aus 60 % C. I. Pigmentrot 122 und 40 % eines wasserlöslichen Acrylharzes, mit 40 Teilen einer wässrig-alkoholischen Lösung, welche 30-40 % eines wasserlöslichen Acrylharzes in der Form eines Aminsalzes enthält (z. B. Aquahyde 100 der Lawter Chemicals, Säurezahl 76), 10 Teile 1-Bis(β-hydroxyäthyl)-aminomethyl-benztriazol, 10 Teile Isopropanol und 40-50 Teile Wasser.

Beispiel 2

Man verfährt wie in Beispiel 1, verwendet aber als Pigment C. I. Pigmentgelb 93.

Beispiel 3

Man verfährt wie in Beispiel 1, verwendet aber als Pigment β-Kupferphtalocyanin.

Beispiel 4

Man vermischt unter Rühren 5 Teile eines gemäss DE-OS 2 729 892 erhaltenen Pigmentpräparates, bestehend aus 60 % C. I. Pigmentrot 122 und 40 % eines wasserlöslichen Acrylharzes mit 15 Teilen einer wässrig-alkoholischen Lösung, welche 30-40 % eines wasserlöslichen Acrylharzes in Form eines Aminsalzes enthält, 50 Teile eines ca. 55 %igen wässrigen PVC-Latex (z. B. Lonzavyl Latex P 712® von Lonza), 10 Teilen eines Gemisches aus 1-Bis-(β-hydroxyäthyl)-aminomethyl-5- und -6-methyl-benztriazol, 15 Teile Isopropanol und 5 Teile Wasser.

Beispiel 5

Man vermischt unter Rühren 5 Teile eines gemäss DE-OS 2 729 892 erhaltenen Pigmentpräparates bestehend aus 65 % Pigmentgelb 83 und 35 % eines wässerlöslichen Acrylharzes mit 85 Teilen einer wässrig-alkoholischen Lösung, welche 10 Teile Polyvinylalkohol (z. B. Mowiol 4-88® von Hoechst), 28 Teile Isopropanol und 62 Teile Wasser enthält, und 10 Teile 1-Bis-(β-hydroxyäthyl)-amino-methyl-benztriazol.

Beispiel 6

Man verfährt wie in Beispiel 1, verwendet aber anstelle des 1-Bis-(β-hydroxyäthylamino)-methyl-benztriazol, das Benzimidazol der Formel 3) (X = CH).

Beispiel 7 : (Herstellung des verschäumbaren Plastisols)

Ein verschäumbares Plastisol wird durch Vermahlen der folgenden Bestandteile auf einem Dreiwalzenstuhl hergestellt :

50 Teile PVC (Dispersionstyp, spezifische Viscosität 0,6)
50 Teile PVC (Dispersionstyp, spezifische Viscosität 0,4)
25 Teile Butyl-benzyl-phtalat
45 Teile Di-(2-äthylhexyl)-phthalat
7 Teile Titandioxid
3 Teile Azodicarbonamid,
1,5 Teile Stabilisator.

Das Plastisol gemäss Absatz 1 wird als einheitliche Schicht von 300 μm Dicke auf die Oberfläche eines 635 μm starken, mit 20 % Polyvinylacetat imprägnierten und mit PVC-Latex beschichteten Cellulosefilzvlieses aufgebracht. Anschliessend wird die Plastisolschicht während 50 Sekunden auf 154° erhitzt wobei die Schicht in den gelzustand übergeht.

In einer Zylinder-Tiefdruckmaschine wird dann eine oder mehrere Druckfarben gemäss Beispielen 1-6 auf die Oberfläche der gelierten Schicht gebracht. Häufig werden bei mehrfarbigen Druckmotiven Druckfarben gemäss Beispielen 1-6 neben entsprechenden Druckfarben ohne die Schaumbildung verhindernde Mittel appliziert. Auf die Druckoberfläche wird weiter eine Plastisoldeckschicht aufgetragen.

Anschliessend wird die ganze Beschichtung durch einen Ofen geleitet und dort langsam auf 204 °C erhitzt, wobei die Plastisolschicht unter Zersetzung des Blähmittels eine Schaumschicht bildet, die an den mit Druckfarben gemäss Beispiel 1-6 bedruckten Stellen Vertiefungen aufweist.

## Patentansprüche

1. Druckfarben enthaltend ein Pigment- oder Pigmentpräparat, ein thermoplastisches Harz, Wasser, ein wasserlösliches organisches Lösungsmittel und ein die Schaumbildung von Blähmittel enthaltenden schäumbaren Materialien verhinderndes Mittel, dadurch gekennzeichnet, dass letzteres ein Azol der Formel

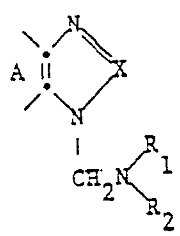

(1)

ist, worin A einen Benzol- oder Naphtalinrest, X ein N-Atom oder die Gruppe = C—R bedeutet, worin R ein H Atom oder eine Alkylgruppe mit 1-4 C bedeutet, $R_1$ eine Alkyl- oder Alkenylgruppe mit 1-20 C, eine Hydroxyalkylgruppe mit 2-20 C, eine Alkoxyalkyl-oder Cyanoalkylgruppe mit 3-20 C, eine Cycloalkylgruppe mit 5-12, eine Phenalkylgruppe mit 7-9 C bedeutet, $R_2$ die gleiche Bedeutung wir $R_1$ hat und ausserdem noch H sein kann, oder worin $R_1$ und $R_2$ zusammen mit dem N-Atom einen heterocyclischen Ring bilden.

2. Druckfarbe gemäss Anspruch 1, enthaltend ein Azol der Formel

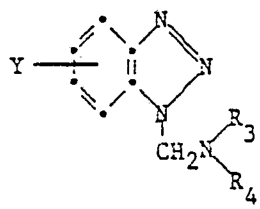

(2)

worin $R_3$ und $R_4$ Alkylreste mit 1-6 C Hydroxylkylreste mit 2-6 C und Y ein H-Atom, eine Alkylgruppe mit 1-6 C oder eine Phenalkylgruppe mit 7-9 C bedeutet.

3. Druckfarbe gemäss den Ansprüchen 1 und 2, enthaltend ein Azol der Formel 2), worin Y eine sich in 5- oder 6-Stellung befindliche Methylgruppe bedeutet.

4. Druckfarbe gemäss Anspruch 1, enthaltend als thermoplastisches Harz ein in Wasser lösliches, emulgier- oder dispergierbares Acrylharz, Polyvinylchlorid oder Vinylchlorid-Vinylacetat-Copolymer, Polyvinylacetat, Polyvinylalkohol oder ein Polyurethan.

5. Druckfarbe gemäss Anspruch 1, enthaltend als Hauptlösungsmittel Wasser.

6. Druckfarbe gemäss Anspruch 1 enthaltend als wasserlösliches Lösungsmittel einen aliphatischen Alkohol mit 1-4 C.

7. Druckfarbe gemäss Anspruch 1, dadurch gekennzeichnet, dass sie auf 100 Gewichts-Teile 1-5 Gewichts-Teile Pigment, 2-20 Gewichts-Teile des Azols, 15-40 Gewichts-Teile des Harzes, 5-25 Gewichts-Teile organisches Lösungsmittel und 5-75 Gewichts-Teile Wasser enthält.

8. Druckfarbe gemäss Anspruch 5, enthaltend auf 100 Gewichtsteile 10-25 Teile organisches Lösungsmittel.

9. Verfahren zum Prägen hitzeschäumbarer, harzhaltiger Materialien, bei dem eine Druckfarbe auf ausgewählte Partien der Oberfläche des hitzeschäumbaren, ein Blähmittel enthaltenden Materials aufgebracht und dieses über die Zersetzungstemperatur des Blähmittels erhitzt wird, dadurch gekennzeichnet, dass eine Druckfarbe gemäss Anspruch 1 verwendet wird.

**Claims**

1. A printing ink composition comprising a pigment or pigment preparation, a thermoplastic resin, water, a water-soluble organic solvent and an inhibitor for preventing the foaming of a foamable material containing a blowing agent, said inhibitor being an azole of the formula

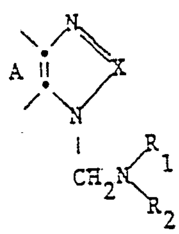

(1)

wherein A is a benzene or naphthalene radical, X is a nitrogen atom or the = C—R group, wherein R is a hydrogen atom or an alkyl group of 1 to 4 carbon atoms, $R_1$ is an alkyl or alkenyl group, each of 1 to 20 carbon atoms, a hydroxyalkyl group of 2 to 20 carbon atoms, an alkoxyalkyl or cyanoalkyl group, each of 3 to 20 carbon atoms, a cycloalkyl group of 5 to 12 carbon atoms, or a phenalkyl group of 7 to 9 carbon atoms, $R_2$ has the same meaning as $R_1$ and can in addition be hydrogen, or $R_1$ and $R_2$, together with the nitrogen atom to which they are attached, form a heterocyclic ring.

2. A printing ink composition according to claim 1, which contains an azole of the formula

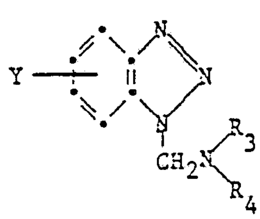

(2)

Wherein $R_3$ and $R_4$ are alkyl radicals of 1 to 6 carbon atoms or hydroxyalkyl radicals of 2 to 6 carbon atoms, Y is a hydrogen atom, an alkyl group of 1 to 6 carbon atoms or a phenalkyl group of 7 to 9 carbon atoms.

3. A printing ink composition according to either of claims 1 or 2, which contains an azole of the formula (2), wherein Y is a methyl group which is in the 5- or 6-position.

4. A printing ink composition according to claim 1, wherein the thermoplastic resin is a water-soluble, emulsifiable or dispersible acrylic resin, polyvinyl chloride or copolymer of vinylchloride and vinyl acetate, polyvinyl acetate, polyvinyl alcohol or a polyurethane.

5. A printing ink composition according to claim 1, wherein the principal solvent is water.

6. A printing ink composition according to claim 1, wherein the water-soluble solvent is an aliphatic alcohol containing 1 to 4 carbon atoms.

7. A printing ink composition according to claim 1 which contains, based on 100 parts by weight of said composition, 1 to 5 parts by weight of pigment, 2 to 20 parts by weight of azole, 15 to 40 parts by weight of resin, 5 to 25 parts by weight of organic solvent, and 5 to 75 parts by weight of water.

8. A printing ink composition according to claim 5 which contains, based on 100 parts by weight of said composition, 10 to 25 parts by weight of organic solvent.

9. A method of embossing a heat-foamable, resinous material, which method comprises applying a printing ink composition according to claim 1 to selected areas of the surface of said heat-foamable material containing a blowing agent, and heating said material to a temperature above the decomposition temperature of the blowing agent.

**Revendications**

1. Encres d'impression contenant un pigment ou une préparation de pigment, une résine thermoplastique, de l'eau, un solvant organique hydrosoluble et un agent empêchant le moussage de matières moussables contenant du porophore, encres caractérisées en ce que cet agent est un azole de formule

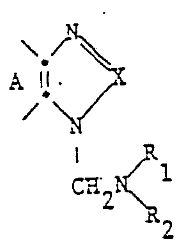

(1)

dans laquelle A représente un reste benzène ou naphtalène, X est un atome d'azote ou le groupe = C—R, où R est une atome d'hydrogène ou un groupe alkyle ayant 1 à 4 atomes de carbone, $R_1$ représente un groupe alkyle ou alcényle ayant 1 à 20 atomes de carbone, un groupe hydroxyalkyle ayant 2 à 20 atomes de carbone, un groupe alcoxyalkyle ou cyanoalkyle ayant 3 à 20 atomes de carbone, un groupe cycloalkyle ayant 5 à 12 atomes de carbone, un groupe phénalkyle ayant 7 à 9 atomes de carbone ; $R_2$ a le même sens que $R_1$ et peut représenter également H, ou bien $R_1$ et $R_2$ forment, avec l'atome d'azote, un noyau hétérocyclique.

2. Encre d'impression selon la revendication 1, contenant un azole de formule

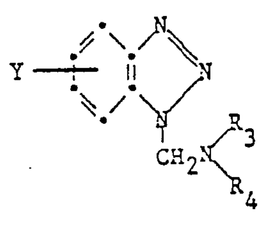

(2)

dans laquelle $R_3$ et $R_4$ représentent des restes alkyles ayant 1 à 6 atomes de carbone ou des restes hydroxyalkyles ayant 2 à 6 atomes de carbone et Y représente un atome d'hydrogène, un groupe alkyle ayant 1 à 6 atomes de carbone ou un groupe phénalkyle ayant 7 à 9 atomes de carbone.

3. Encre d'impression selon les revendications 1 et 2, contenant un azole de formule (2), dans laquelle Y représente un groupe méthyle se trouvant en position 5 ou 6.

4. Encre d'impression selon la revendication 1, contenant comme résines thermoplastiques une résine acrylique, du poly(chlorure de vinyle) ou du copolymère chlorure de vinyle/acétate de vinyle, du poly(acétate de vinyle), du poly(alcool vinylique) hydrosoluble, émulsifiable ou dispersable dans l'eau, ou un polyuréthanne.

5. Encre d'impression selon la revendication1, contenant de l'eau comme solvant principal.

6. Encre d'impression selon la revendication 1, contenant, comme solvant hydrosoluble, un alcool aliphatique ayant 1 à 4 atomes de carbone.

7. Encre d'impression selon la revendication 1, caractérisée en ce qu'elle contient, pour 100 parties en poids, 1 à 5 parties en poids de pigment, 2 à 20 parties en poids de l'azole, 15 à 40 parties en poids de la résine, 5 à 25 parties en poids d'un solvant organique et 5 à 75 parties en poids d'eau.

8. Encre d'impression selon la revendication 5, contenant pour 100 parties en poids 10 à 25 parties d'un solvant organique.

9. Procédé pour marquer des matières contenant de la résine pouvant mousser à chaud, selon lequel on applique une encre d'impression sur des parties choisies de la surface de la matière moussable à chaud, contenant un porophore, et l'on chauffe cette matière au-delà de la température de décomposition du porophore, procédé caractérisé en ce qu'on utilise une encre d'impression selon la revendication 1.